# EUROPEAN PATENT APPLICATION

(11) **EP 4 580 106 A1**
(43) Date of publication of application: **02.07.2025**
(21) Application number: 23852021.7
(22) Date of filing: 12.08.2023
(51) Int. Cl.: H04L 5/00

(54) **METHOD AND APPARATUS FOR WIRELESS COMMUNICATION**

(30) Priority: 12.08.2022 CN 202210971801
(71) Applicant: SHANGHAI LANGBO COMMUNICATION TECHNOLOGY COMPANY LIMITED, Shanghai 200240 (CN)
(72) Inventor: ZHANG, Xiaobo, Shanghai 201206 (CN)
(74) Representative: Laqua, Bernd Christian Kurt
(86) International application number: PCT/CN2023/112780
(87) International publication number: WO 2024/032801

(57) **Abstract**

Disclosed in the present application are methods and devices for wireless communication. a first receiver receiving a first CSI-ReportConfig and receiving a first DCI; a first transmitter sending at least a first CSI Reporting as a response to receiving the first DCI; wherein the first CSI-ReportConfig is used to configure the at least first CSI Reporting; the first CSI Reporting occupies a CSI processing unit from the first symbol until the last symbol of the first physical layer channel; the first CSI Reporting is on the first physical layer channel; the first symbol is related to the reportConfigType domain in the first CSI-ReportConfig. The present application can reduce complexity, optimize CPU occupancy, improve the feedback efficiency of CSI, and improve performance.

## Description

### Technical Field

The present disclosure relates to methods and apparatuses in wireless communication systems, particularly to schemes and apparatuses of Channel Status Information (CSI) in wireless communication systems.

### Background Art

In traditional wireless communication, User Equipment (UE) reporting may include at least one of a variety of auxiliary information, such as Channel state information (CSI), auxiliary information related to Beam Management, auxiliary information related to localization, and the like. The network device selects the appropriate transmission parameters for UE based on the UE reporting, such as residing in the cell, Modulation and Coding Scheme (MCS), Transmitted Precoding Matrix Indicator (TPMI), Transmission Configuration Indicator (TCI), etc. Further, the UE Reporting may be used to optimize network parameters such as better cell coverage, switch base stations based on the UE location, and the like.

In the New Radio (NR) system, the priority of the CSI report is defined, which is used to determine whether to assign CSI Processing Unit (CPU) resources to the corresponding CSI Reporting for updating, or whether to drop the corresponding CSI report.

### Summary of Invention

In NR R (release) 15 and R16, the ability of UE to simultaneously perform CSI computing capabilities is introduced to determine the number of CSI Reporting that UE can update at the same time. The inventors have found, through research, that in order to reduce the energy consumption of the base station, it is possible to trigger periodic CSI Reporting using dynamic signaling, at which point the CPU occupation time needs to be further adjusted.

Disclosed in the present application are solution to the above problems. It is to be noted that although a large number of embodiments of the present application are described for NR systems, the present application can also be used for other types of cellular systems such as Long Term Evolution (LTE). Further, the adoption of a unified UE reporting scheme can reduce complexity or improve performance. In the absence of conflicts, the embodiments of any of the nodes of the present application and the features of the embodiments may be applied to any of the other nodes. In the absence of conflicts, the embodiments of the present application and the features in the embodiments may be arbitrarily combined with each other.

If desired, the interpretation of the terms in the present application may refer to the description of the standard protocol TS38 series of 3rd Generation Partner Project (3GPP).

Disclosed in the present application are a method for use in a first node for wireless communication, wherein it comprises:
receiving a first CSI-ReportConfig (CSI-Report Configuration) and a first Downlink Control Information (DCI);
sending at least a first CSI Reporting as a response to receiving the first DCI;
wherein, the first CSI-ReportConfig is used to configure the at least first CSI Reporting; the first CSI Reporting occupying a CSI processing unit from a first symbol until the last symbol of the first physical layer channel, the first CSI Reporting is on the first physical layer channel; the first symbol relates to a reportConfigType (Reporting Configuration Type) domain in the first CSI-ReportConfig; when the reportConfigType domain in the first CSI-ReportConfig is Semi-continuous on a Physical Uplink Shared Channel (semiPersistentOnPUSCH), the first symbol is the first symbol of the Physical Downlink Control Channel (PDCCH) occupied by the first DCI; when the reportConfigType domain in the first CSI-ReportConfig is periodic, the first symbol is the oldest symbol in the first occasion set, the first occasion set includes at least one of the following occasions before the first CSI Reporting CSI reference resource: the most recent Channel state Information Reference Signal (CSI-RS) Occasion, recent Channel State Information - Interference Measurement (CSI-IM) Occasion, or nearest SS/PBCH block (SSB) Occasion.

As an embodiment, the above methods enable dynamic triggering or activation of periodic CSI Reporting, improving the feedback efficiency of CSI and reducing redundant overhead; further, it is beneficial to save power consumption of base stations or UE.

As an embodiment, the above approach avoids the premature occupancy of the CPU by periodic CSI Reporting, thereby avoiding the inability of a higher priority CSI to be assigned to the CPU.

Specifically, according to one aspect of the present application, for the methods described above, wherein it comprises:
sending a first HARQ-ACK, which is associated with the first DCI;
wherein, the first physical layer channel follows the first HARQ-ACK, and the time-domain resources occupied by the first HARQ-ACK are used to determine the first physical layer channel.

The above methods can avoid misunderstandings between the two parties, and the reasons for such misunderstandings include the leakage or false alarm of the first DCI.

As an embodiment, the first HARQ-ACK is an ACK.

As an embodiment, the time domain resource occupied by the first HARQ-ACK is a time domain resource occupied by PUSCH carrying the first HARQ-ACK.

As an embodiment, the time domain resource occupied by the first HARQ-ACK is a time domain resource occupied by PUCCH carrying the first HARQ-ACK.

As an embodiment, the first HARQ-ACK is used to indicate whether the first DCI is properly encoded.

As an embodiment, the first HARQ-ACK is used to indicate whether the Physical Downlink Shared Channel (PDSCH) scheduled by the first DCI is properly encoded.

Specifically, according to one aspect of the present application, for the methods described above, wherein it comprises:
performing a measurement in a first RS resource group, the measurement in the first RS resource group being used to generate the first CSI Reporting;
wherein the first DCI is used to trigger the measurement in the first RS resource group comprising at least one of a CSI-RS resource, a CSI-IM resource, and an SSB resource.

As an embodiment, the above method can reduce the redundant overhead caused by RS resources, especially periodic or semi-continuous RS resources.

As an embodiment, the above method can reduce the energy loss caused by the transmission of the base station side to remain on the RS resource.

The measurement in the first RS resource group includes at least one of an interference measurement and a channel measurement.

Specifically, according to one aspect of the present application, the method above is characterized in that the at least first CSI Reporting comprises a plurality of CSI Reporting, with the first CSI Reporting being the earliest among them; for any CSI Reporting other than the first CSI Reporting, the CSI processing unit is occupied from the target symbol until the last symbol of the target physical layer channel, and the CSI Reporting is on the target physical layer channel; the target symbol is the earliest symbol in the target occasion set, which includes at least one of the most recent CSI-RS occasion, the most recent CSI-IM occasion, or the most recent SSB occasion before the CSI reference resource of the CSI Reporting.

The above aspects or embodiments can avoid the use of excessive time of CPU for lower-priority CSI Reporting and improve the utilization efficiency of CPU.

Specifically, according to one aspect of the present application, the above method is characterized in that, when the reportConfigType domain in the first CSI-ReportConfig is semiPersistentOnPUSCH, the first physical layer channel is PUSCH; when the reportConfigType domain in the first CSI-ReportConfig is periodic, the first physical layer channel is Physical Uplink Control CHannel (PUCCH).

Disclosed in the present application are a method for use in a second node for wireless communication, wherein it comprises:
sending a first CSI-ReportConfig and a first DCI;
receiving at least a first CSI Reporting;
wherein the first DCI is used to trigger the first CSI Reporting, the first CSI-ReportConfig is used to configure the at least first CSI Reporting; the first CSI Reporting occupies a CSI processing unit from the first symbol until the last symbol of the first physical layer channel; the first CSI Reporting is on the first physical layer channel; the first symbol is related to the reportConfigType domain in the first CSI-ReportConfig; when the reportConfigType domain in the first CSI-ReportConfig is semiPersistentOnPUSCH, the first symbol is the first symbol after the PDCCH occupied by the first DCI; when the reportConfigType domain in the first CSI-ReportConfig is periodic, the first symbol is the earliest symbol in the first occasion set, which includes at least one of the most recent CSI-RS occasion, the most recent CSI-IM occasion, or the most recent SSB occasion before the CSI reference resource of the first CSI Reporting.

Specifically, according to one aspect of the present application, for the methods described above, wherein it comprises:
the second receiver receiving a first HARQ-ACK, the first HARQ-ACK being associated with the first DCI;
wherein, the first physical layer channel follows the first HARQ-ACK, and the time-domain resources occupied by the first HARQ-ACK are used to determine the first physical layer channel.

Specifically, according to one aspect of the present application, for the methods described above, wherein it comprises:
the second transmitter transmitting a reference signal in a first RS resource group, wherein the reference signal in the first RS resource group is used to generate the first CSI Reporting;
wherein the first DCI is used to trigger a measurement in the first RS resource group comprising at least one of a CSI-RS resource and an SSB resource.

Specifically, according to one aspect of the present application, the method above is characterized in that the at least first CSI Reporting comprises a plurality of CSI Reporting, with the first CSI Reporting being the earliest among them; for any CSI Reporting other than the first CSI Reporting, the CSI processing unit is occupied from the target symbol until the last symbol of the target physical layer channel, and the CSI Reporting is on the target physical layer channel; the target symbol is the earliest symbol in the target occasion set, which includes at least one of the most recent CSI-RS occasion, the most recent CSI-IM occasion, or the most recent SSB occasion before the CSI reference resource of the CSI Reporting.

Specifically, according to one aspect of the present application, the above method is characterized in that when the reportConfigType domain in the first CSI-ReportConfig is semiPersistentOnPUSCH, the first physical layer channel is PUSCH; and when the reportConfigType domain in the first CSI-ReportConfig is periodic, the first physical layer channel is PUCCH.

Disclosed in the present application are first node for wireless communication, wherein it comprises:
a first receiver, receiving a first CSI-ReportConfig, receiving a first DCI;
a first transmitter, sending at least a first CSI Reporting as a response to receiving the first DCI;
wherein the first CSI-ReportConfig is used to configure the at least first CSI Reporting; the first CSI Reporting occupies a CSI processing unit from the first symbol until the last symbol of the first physical layer channel, the first CSI Reporting is on the first physical layer channel; the first symbol is related to the reportConfigType domain in the first CSI-ReportConfig; when the reportConfigType domain in the first CSI-ReportConfig is semiPersistentOnPUSCH, the first symbol is the first symbol after the PDCCH occupied by the first DCI; when the reportConfigType domain in the first CSI-ReportConfig is periodic, the first symbol is the earliest symbol in the first occasion set, which includes at least one of the most recent CSI-RS occasion, the most recent CSI-IM occasion, or the most recent SSB occasion before the CSI reference resource of the first CSI Reporting.

Disclosed in the present application are a second node for wireless communication, wherein it comprises:
a second transmitter, sending a first CSI-ReportConfig, sending a first DCI;
a second receiver receiving at least a first CSI Reporting;
wherein the first DCI is used to trigger the first CSI Reporting, the first CSI-ReportConfig is used to configure the at least first CSI Reporting; the first CSI Reporting occupies a CSI processing unit from the first symbol until the last symbol of the first physical layer channel; the first CSI Reporting is on the first physical layer channel; the first symbol is related to the reportConfigType domain in the first CSI-ReportConfig; when the reportConfigType domain in the first CSI-ReportConfig is semiPersistentOnPUSCH, the first symbol is the first symbol after the PDCCH occupied by the first DCI; when the reportConfigType domain in the first CSI-ReportConfig is periodic, the first symbol is the earliest symbol in the first occasion set, which includes at least one of the most recent CSI-RS occasion, the most recent CSI-IM occasion, or the most recent SSB occasion before the CSI reference resource of the first CSI Reporting.

### Description of Accompanying Drawings

Other features, purposes, and advantages of the present application will become more apparent by reading the detailed description of the non-limiting embodiments with reference to the following drawings:
FIG. 1 illustrates a flow diagram of sending a CSI Reporting of a first node according to an embodiment of the present application;
FIG. 2 illustrates a schematic diagram of a network architecture according to an embodiment of the present application;
FIG. 3 illustrates a schematic diagram of an embodiment of a wireless protocol architecture for a user plane and a control plane according to an embodiment of the present application;
FIG. 4 illustrates a schematic diagram of a hardware module of a communication node according to an embodiment of the present application;
FIG. 5 illustrates a signal transmission flow diagram according to an embodiment of the present application;
FIG. 6 illustrates a schematic diagram of a first PDCCH, a first occasion set, and a first physical layer channel, according to an embodiment of the present application;
FIG. 7 illustrates a schematic diagram of a first PDCCH, a first occasion set, and a first physical layer channel according to yet another embodiment of the present application;
FIG. 8 illustrates a structural block diagram of a processing device for use in a first node, according to an embodiment of the present application;
FIG. 9 illustrates a structural block diagram of a processing device for use in a second node according to an embodiment of the present application.

### Specific Embodiments

The technical solution of the present application will be described in further detail below in conjunction with the accompanying drawings, and it is to be noted that, in the absence of conflicts, the embodiments of the present application and the features in the embodiments may be arbitrarily combined with each other.

### Embodiment 1

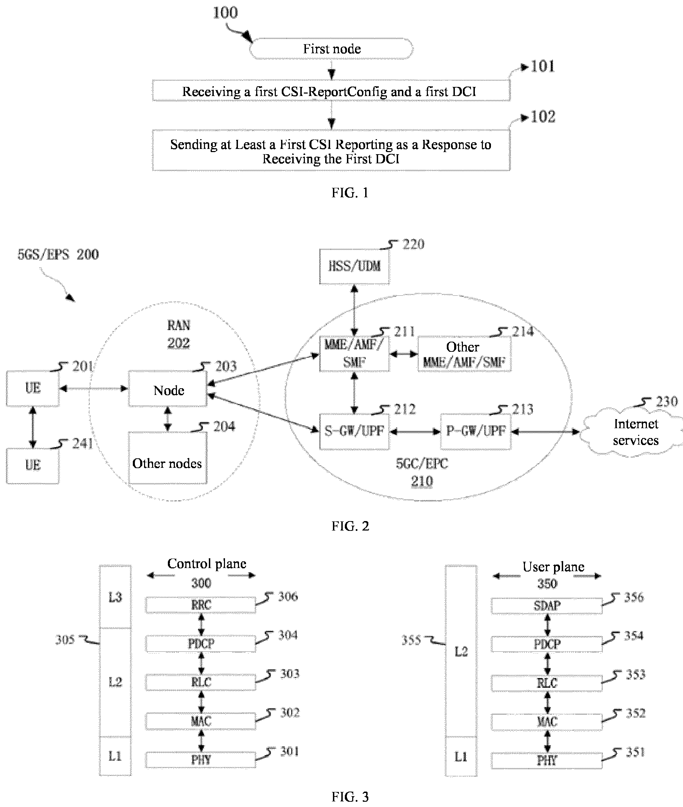

Embodiment 1 illustrates a flow diagram of sending a CSI Reporting of a first node for an embodiment of the present application, as shown in FIG. 1.

The first node 100 receives the first CSI-ReportConfig and the first DCI in step 101 and, in step 102, sending at least a first CSI Reporting as a response to receiving the first DCI.

In Embodiment 1, the first CSI-ReportConfig is used to configure the at least first CSI Reporting; the first CSI Reporting occupies a CSI processing unit from the first symbol until the last symbol of the first physical layer channel, the first CSI Reporting is on the first physical layer channel; the first symbol is related to the reportConfigType domain in the first CSI-ReportConfig; when the reportConfigType domain in the first CSI-ReportConfig is semiPersistentOnPUSCH, the first symbol is the first symbol after the PDCCH occupied by the first DCI; when the reportConfigType domain in the first CSI-ReportConfig is periodic, the first symbol is the earliest symbol in the first occasion set, which includes at least one of the most recent CSI-RS occasion, the most recent CSI-IM occasion, or the most recent SSB occasion before the CSI reference resource of the first CSI Reporting.

In Embodiment 1, the first node 100 sends a first HARQ-ACK, wherein the first HARQ-ACK is associated to the first DCI; wherein after the first physical layer channel is in the first HARQ-ACK, the time domain resource occupied by the first HARQ-ACK is used to determine the first physical layer channel.

As an embodiment, the first CSI-ReportConfig is used to indicate the first occasion set.

As an embodiment, csi-IM-ResourcesForInterference in the first CSI-ReportConfig is used to configure the CSI-IM resources.

As an embodiment, the resourcesForChannelMeasurement in the first CSI-ReportConfig is used to configure a CSI-RS resource or an SSB resource.

As an embodiment, nzp-CSI-RS-ResourcesForInterference in the first CSI-ReportConfig is used to configure CSI-RS resources.

The CSI-RS resources, CSI-IM resources, or SSB resources described above occupy multiple time slots in the time domain, where parts within one time slot are referred to as an occasion.

As an embodiment, the time intervals between any two adjacent time slots of the plurality of time slots are the same.

As an embodiment, when the reportConfigType domain in the first CSI-ReportConfig is semiPersistentOnPUCCH, the first symbol is the first symbol after the PDCCH occupied by the first DCI.

As an embodiment, the format of the first DCI is a DCI format for Uplink Grant.

As an embodiment, the format of the first DCI is Format 0_1.

As an embodiment, the format of the first DCI is Format 0_2.

As an embodiment, the symbol is an Orthogonal Frequency Division Multiplexing (OFDM) symbol.

As an embodiment, the symbol is a Discrete Fourier Transform-spread-OFDM (DFT-s-OFDM) symbol.

As an embodiment, the first HARQ-ACK is associated with the first DCI comprising: The first HARQ-ACK is used to indicate whether the first DCI is correctly encoded.

As an embodiment, the first HARQ-ACK is associated with the first DCI comprising: The first HARQ-ACK is used to indicate whether the PDSCH scheduled by the first DCI is correctly encoded.

As an embodiment, the first HARQ-ACK includes a HARQ-ACK Codebook.

As an embodiment, the first HARQ-ACK includes a Type-1 HARQ-ACK Codebook.

As an embodiment, the first HARQ-ACK includes a Type-2 HARQ-ACK Codebook.

As an embodiment, the first HARQ-ACK includes a Type-3 HARQ-ACK Codebook.

As an embodiment, the first HARQ-ACK is one bit of a HARQ-ACK Codebook.

As an embodiment, the first DCI is transmitted on PDCCH.

As an embodiment, the first DCI occupies only one PDCCH candidate, the PDCCH occupied by the first DCI being a PDCCH candidate occupied by the first DCI.

As an embodiment, the first DCI occupies two PDCCH candidates, the first symbol after the PDCCH occupied by the first DCI being the first symbol after the latest symbol occupied by the two PDCCH candidates.

As an embodiment, the first CSI Reporting is calculated based on PDSCH on the CSI reference resource reported on the first CSI.

As an embodiment, the CSI reference resource reported by the first CSI is a subband or broadband for which the first CSI Reporting is directed in the frequency domain.

As an embodiment, the CSI reference resource reported by the first CSI belongs to the same Bandwidth Part (BWP) in the frequency domain as the frequency domain resource for which the first CSI is reported.

As an embodiment, the CSI reference resource of the first CSI Reporting is located in a time slot over a time domain.

As an embodiment, the time slot of the CSI reference resource of the first CSI Reporting depends on the time slot occupied by the first physical layer channel.

As an embodiment, the time slot of the CSI reference resource of the first CSI Reporting is before the first physical layer channel.

As an embodiment, when the reportConfigType domain in the first CSI-ReportConfig is semiPersistentOnPUSCH, the first physical layer channel is PUSCH; and when the reportConfigType domain in the first CSI-ReportConfig is periodic, the first physical layer channel is PUCCH.

As an embodiment, when the reportConfigType domain of the first CSI-ReportConfig is semiPersistentOnPUCCH, the first physical layer channel is PUCCH.

As an embodiment, the first node 100 performs a measurement in a first RS resource group, the measurement in the first RS resource group being used to generate the first CSI Reporting; wherein the first DCI is used to trigger the measurement in the first RS resource group comprising at least one of a CSI-RS resource, a CSI-IM resource, and an SSB resource.

As an embodiment, the first DCI is used to trigger a first operation set.

As an embodiment, the first operation set includes performing measurements in the first RS resource group.

As an embodiment, the first operation set includes the at least first CSI Reporting.

As an embodiment, the first operation set includes switching a hypothetical for measuring the first RS resource group from a first Quasi co-location (QCL) parameter to a second QCL parameter.

As an embodiment, the first QCL parameter indicates at least one of the first downlink RS resource and the first *qcl-Type* (QCL type); the second QCL parameter indicates at least one of the second downlink RS resource and the second *qcl-Type.*

As an embodiment, the first and second downlink RS resources are respectively indicated by an SSB index.

As an embodiment, the first and second downlink RS resources are respectively a CSI-RS resource.

As an embodiment, before performing the behavior to switch from the first QCL parameter to the second QCL parameter, any RS resource in the first RS resource group and the first downlink RS resource QCL; after performing the behavior to switch from the first QCL parameter to the second QCL parameter, any RS resource in the first RS resource group and the second downlink RS resource QCL.

As an embodiment, prior to performing the behavior to switch from the first QCL parameter to the second QCL parameter, any RS port of any one of the RS resources in the first RS resource group and any of the first downlink RS resources are QCL; after performing the behavior to switch from the first QCL parameter to the second QCL parameter, any of the RS resources in the first RS resource group and the second downlink RS resource are QCL.

As an embodiment, prior to performing the behavior to switch from the first QCL parameter to the second QCL parameter, the QCL type of any one of the RS resources in the first RS resource group and the first downlink RS resource is indicated by the first *qcl-Type*; after performing the behavior to switch from the first QCL parameter to the second QCL parameter, the QCL type of any one of the first RS resource groups and the second downlink RS resource is indicated by the second *qcl-Type.*

As an embodiment, the content included in each of the at least first CSI Reporting is indicated by the reportQuantity in the first CSI-reportconfig.

As an embodiment, any of the first CSI Reporting in the at least first CSI Reporting includes at least one of the following: Channel Quality Indicator (CQI), Precoding Matrix Indicator (PMI), CSI-RS resource indicator (CRI), SS/PBCH Block Resource Indicator (SSBRI), Layer Indicator (LI), Rank Indicator (RI), Layer 1 reference signal received power (L1-RSRP), Layer 1 signal-to-noise and interference ratio (L1-SINR), and Capability[Set]Index.

As an embodiment, the reportConfigType domain in the first CSI-ReportConfig is used to direct CSI to report behavior on the time domain.

As an embodiment, the reportConfigType domain in the first CSI-ReportConfig is periodic.

As an embodiment, the reportConfigType domain in the first CSI-ReportConfig is semiPersistentOnPUCCH.

As an embodiment, the reportConfigType domain in the first CSI-ReportConfig is semiPeristentOnPUSCH.

As an embodiment, the CSI processing unit is used to calculate a CSI.

As an embodiment, the CSI processing unit is used to process the at least first CSI Reporting.

As an embodiment, the first CSI Reporting requires the use of 0, 1 or more CSI processing units.

As an embodiment, for any CSI Reporting in the at least first CSI Reporting other than the first CSI Reporting, the CSI processing unit is occupied from the target symbol to the last symbol of the target physical layer channel, which is the earliest symbol in the target occasion set, which includes at least one of the most recent CSI-RS occasion, the most recent CSI-IM occasion, or the most recent SSB occasion for the CSI reference resource reported by any of the CSI.

### Embodiment 2

Embodiment 2 illustrates a schematic diagram of a network architecture according to an embodiment of the present application, as shown in FIG. 2. FIG. 2 illustrates the network architecture 200 of the 5G NR/LTE/LTE-A (Long-Term Evolution Advanced) system. The 5G NR/LTE/LTE-A network architecture 200 may be referred to as 5G System (5GS)/Evolved Packet System (EPS) 200 or some other suitable term. 5GS/EPS 200 includes at least one of the UE201, Radio Access Network (RAN) 202, 5G Core Network (5GC)/Evolved Packet Core (EPC) 210, Home Subscriber Server (HSS)/Unified Data Management (UDM) 220 and Internet Services 230. 5GS/EPS may be interconnected with other access networks, but these entities/interfaces are not shown for simplicity. As shown, 5GS/EPS provides packet exchange services. However, it will be readily understood by those skilled in the art that various concepts presented throughout the present application can be extended to a network or other cellular network providing circuit switching services. The RAN includes nodes 203 and other nodes 204. The node 203 provides for termination of the user and control plane protocol toward UE201. The nodes 203 may be connected to other nodes 204 via an Xn interface (e.g., backhaul)/X2 interface. The node 203 may also be referred to as a base station, a base transceiver station, a radio base station, a radio transceiver, a transceiver function, a Base Service Set (BSS), an Extension Service Set (ESS), a TRP, or some other suitable term. The node 203 provides access points to the 5GC/EPC210 for UE201. Embodiments of UE201 include cellular phone, smart phone, Session Initiation Protocol (SIP) phone, laptop computer, Personal Digital Assistant (PDA), satellite radio, non-ground base station communication, satellite mobile communication, global positioning system, multimedia device, video device, digital audio player (e.g., MP3 player), camera, game console, drone, aircraft, narrowband Internet of Things devices, machine type communication device, land vehicle, automobile, wearable device, or any other similar functional apparatuses. Those skilled in the art may also refer to UE201 as mobile station, subscriber station, mobile unit, subscriber unit, wireless unit, remote unit, mobile apparatus, wireless apparatus, remote apparatus, mobile subscriber station, access terminal, mobile terminal, wireless terminal, remote terminal, handheld device, user agent, mobile client, or some other suitable term. The node 203 is connected to the 5GC/EPC210 via the S1/NG interface. 5GC/EPC210 comprises Mobility Management Entity (MME)/Authentication Management Field (AMF)/Session Management Function (SMF) 211, other MME/AMF/SMF214, Service Gateway (S-GW)/User Plane Function (UPF) 212 and Packet Date Network Gateway (P-GW)/UPF213. MME/AMF/SMF211 is a control node that processes signaling between UE201 and 5GC/EPC210. In general, MME/AMF/SMF211 provides carrier and connection management. All user Internet Protocol (IP) packages are transmitted via S-GW/UPF212 which is itself connected to P-GW/UPF213. The P-GW provides UE IP address assignment as well as other functions. The P-GW/UPF213 is connected to the Internet service 230. The Internet service 230 comprises an operator's corresponding Internet protocol service, which may include, inter alia, the Internet, an intranet, an IMS (IP Multimedia Subsystem, IP Multimedia Subsystem), and a packet exchange streaming service.

As an embodiment, the UE201 corresponds to the first node in the present application.

As an embodiment, the UE201 is a user device.

As an embodiment, the node 203 corresponds to the second node in the present application.

As an embodiment, the node 203 is a base station device.

As an embodiment, the UE201 supports transmission of a Non-Terrestrial Network (NTN).

As an embodiment, the UE201 supports the transmission of a Terrestrial Network (TN).

As an embodiment, the UE201 includes a cell phone, or a terminal, or an aircraft, or an in-vehicle terminal, or a vessel, or an Internet of Things terminal, or an industrial Internet of Things terminal, or a test device, or a signaling tester.

As an embodiment, the node 203 includes a Base Transceiver Station (BTS).

As an embodiment, the node 203 includes node B (NdeB, NB), or gNB, or eNB, or ng-NB, or en-gNB, or en-gNB, OR TRP, or Centralized Unit (CU), or Distributed Unit (DU).

As an embodiment, the node 203 supports transmission over a Non-Terrestrial Network.

As an embodiment, the node 203 supports transmission over a Terrestrial Network.

As an embodiment, the node 203 includes a macro cellular base station, or a micro cell base station, or a pico cell base station, or a femtocell base station, or a test device, or a signaling tester.

As an embodiment, the node 203 includes Integrated Access and Backhaul (IAB)-node, or IAB-donor, or IAB-donor-CU, or IAB-donor-DU, or IAB-DU, or IAB-MT.

### Embodiment 3

Embodiment 3 illustrates a schematic diagram of an embodiment of a wireless protocol architecture illustrating a user plane and a control plane of an embodiment of the present application, as shown in FIG. 3. FIG. 3 is a schematic diagram illustrating an embodiment of a radio protocol architecture for the user plane 350 and the control plane 300, the FIG. 3 shows, with three layers, a radio protocol architecture for controlling the plane 300: Layers 1, 2 and 3. The layer 1 (L1 layer) is the lowest layer and implements various Physical Layer (PHY) signal processing functions. The L1 layer will be referred to herein as PHY301. The layer 2 (L2 layer) 305 is over PHY301, including the Medium Access Control (MAC) sublayer 302, Radio Link Control (RLC) sublayer 303, and Packet Data Convergence Protocol (PDCP) sublayer 304. The PDCP sublayer 304 provides multiplexing between different radio carriers and logical channels. The PDCP sublayer 304 also provides security through encrypted data packet and provides inter-cell movement support. The RLC sublayer 303 provides segmentation and reassembly of the upper layer data packet, re-transmission of the missing data packet, and re-ordering of the data packet to compensate for out-of-order reception due to Hybrid Automatic Repeat Request (HARQ). The MAC sublayer 302 provides multiplexing between logic and the transmission channel. The MAC sublayer 302 is also responsible for distributing various radio resources (e.g., resource blocks) in one cell. The MAC sublayer 302 is also responsible for HARQ operations. The RRC sublayer 306 in the layer 3 (L3 layer) in the control plane 300 is responsible for obtaining the radio resources (i.e., radio carrier) and using RRC signaling to configure the lower layer. The radio-protocol architecture of the user plane 350 comprises layer 1 (L1 layer) and layer 2 (L2 layer). In the user plane 350, the radio protocol architecture for the physical layer 351, the PDCP sublayer 354 in L2 layer 355, the RLC sublayer 353 in L2 layer 355, and the MAC sublayer 352 in L2 layer 355 is generally similar to the corresponding layers and sublayers in the control plane 300. However, the PDCP sublayer 354 also provides header compression for upper-layer data packets to reduce radio transmission overhead. The L2 layer 355 in the user plane 350 also comprises a sublayer 356 of Service Data Adaption Protocol (SDAP), which is responsible for mapping between the QoS stream and Data Radio Bearer (DRB) to support the diversity of the business.

As an embodiment, the wireless protocol architecture in FIG. 3 applies to the first node in the present application.

As an embodiment, the wireless protocol architecture in FIG. 3 applies to the second node in the present application.

As an embodiment, the first DCI in the present application is generated at the PHY301.

As an embodiment, the first CSI-Reportconfig in the present application is generated at the RRC sublayer 306.

As an embodiment, the at least first CSI Reporting in the present application is generated at the PHY301.

As an embodiment, the measurement for the first reference signal set in the present application is performed in the PHY301.

### Embodiment 4

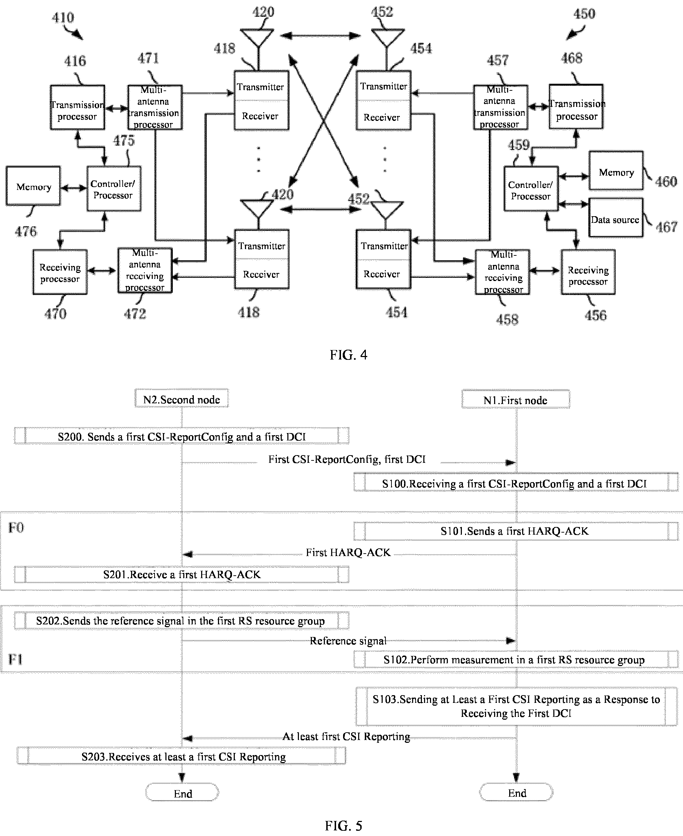

Embodiment 4 illustrates a schematic diagram of a hardware module for a communication node according to an embodiment of the present application, as shown in FIG. 4. FIG. 4 is a block diagram of a first communication device 450 and a second communication device 410 in communication with each other over an access network.

The first communication device 450 comprises a controller/processor 459, a memory 460, a data source 467, a transmission processor 468, a receiving processor 456, a multi-antenna transmission processor 457, a multi-antenna receiving processor 458, a transmitter/receiver 454, and an antenna 452.

The second communication device 410 comprises a controller/processor 475, a memory 476, a receiving processor 470, a transmission processor 416, a multi-antenna receiving processor 472, a multi-antenna transmission processor 471, a transmitter/receiver 418, and an antenna 420.

In the transmission from the second communication device 410 to the first communication device 450, at the second communication device 410, the upper data packet from the core network is provided to the controller/processor 475. The controller/processor 475 implements the functionality of the L2 layer. In transmission from the second communication device 410 to the first communication device 450, the controller/processor 475 provides header compression, encryption, packet segmentation and reordering, multiplexing between logic and the transport channel, and radio resource distribution to the first communication device 450 based on various priority measures. The controller/processor 475 is also responsible for the retransmission of the lost package and the signaling to the first communication device 450. The transmission processor 416 and the multi-antenna transmission processor 471 implement various signal processing functions for the L1 layer (i.e., the physical layer). The transmission processor 416 implements coding and interleaving to facilitate forward error correction (FEC) at the second communication device 410 and mapping of signal clusters based on various modulation schemes (e.g., Binary Phase Shift Keying (BPSK), Quadrature Phase Shift Keying (QPSK), M-Phase Shift Keying (M-PSK), and M-Quadrature Amplitude Modulation (M-QAM)). The multi-antenna transmission processor 471 pre-codes encoded and modulated symbols in digital space, including codebook-based pre-coding and non-codebook-based pre-coding, and beam-based processing, generating one or more spatial streams. The transmission processor 416 then maps each spatial stream to a sub-carrier, multiplexing with a reference signal (e.g., a frequency director) in the time and/or frequency domain, and then used an Inverse Fast Fourier Transform (IFFT) to generate a physical channel of the time domain multi-wave symbol stream on the carrier. The multi-antenna transmission processor 471 then sends the simulated pre-encoding/beaming operation for the time domain multi-carrier symbol flow. Each transmitter 418 converts the baseband multi-carrier symbol flow provided by the multi-antenna transmission processor 471 into a radio frequency flow, which is then provided to a different antenna 420.

In transmission from the second communication device 410 to the first communication device 450, at the first communication device 450, each receiver 454 receives a signal through its respective antenna 452. Each receiver 454 resumes information modulated onto the radio frequency carrier and provides a radio frequency flow to the receiving processor 456 into a base band multi carrier symbol flow. The receiving processor 456 and the multi-antenna receiving processor 458 implement various signal processing functions of the L1 layer. The multi-antenna receiving processor 458 performs a received analog pre-encoding/beam-engraving operation on the base band multi-carrier symbol flow from the receiver 454. The receiving processor 456 uses a Fast Fourier Transform (FFT) to convert the base band multi-carrier symbol flow from the time domain to the frequency domain after receiving the analog pre-encoding/beam-based manipulation. In the frequency domain, the physical layer data signal and the reference signal are demultiplexed by the receiving processor 456, where the reference signal is used for channel estimation and the data signal recovers any spatial flow to the first communication device 450 for destination after multi-antenna detection by the multi-antenna receiving processor 458. The symbols on each spatial flow are demodulated and restored in the receiving processor 456 and generate a soft decision. The processor 456 is then decoded and de-interleaving the soft decision to restore the upper layer data and control signal transmitted by the second communication device 410 over the physical channel. The upper layer data and control signals are then provided to the controller/processor 459. The controller/processor 459 implements the functions of the L2 layer. The controller/processor 459 may be associated with a memory 460 storing program code and data. The memory 460 may be referred to as a computer-readable medium. In the transmission from the second communication device 410 to the second communication device 450, the controller/processor 459 provides multiplexing between the transport and logical channel, packet reassembly, decryption, header decompression, control signal processing to recover the upper data packet from the core network. The upper data packet is then provided to all protocol layers above the L2 layer. Various control signals may also be provided to L3 for L3 processing.

In the transmission from the first communication device 450 to the second communication device 410, at the first communication device 450, the data source 467 is used to provide the upper data packet to the controller/processor 459. The data source 467 represents all protocol layers above the L2 layer. Similar to the transmission function at the second communication device 410 described in the transmission from the second communication device 410 to the first communication device 450, the controller/processor 459 implements header compression, encryption, packet segmentation and reordering, and multiplexing between logic and transport channels based on wireless resource allocation, implementing L2 layer functions for the user plane and control plane. The controller/processor 459 is also responsible for the retransmission of the lost package and the signaling to the second communication device 410. The transmission processor 468 executes the modulation mapping, channel encoding, while the multi-antenna transmission processor 457 performs digital multi-antenna spatial pre-coding, including both codebook-based pre-coding and non-codebook-based pre-coding, and beam-based processing, and then the transmission processor 468 tailors the generated spatial stream to a multi-wave/single-wave symbol stream, which is provided to a different antenna 452 via the transmitter 454 after a simulated pre-encoded/beam operation in the multi-antenna transmission processor 457. Each transmitter 454 first converts the baseband symbol flow provided by the multi-antenna transmission processor 457 into a radio frequency symbol flow and then provides it to the antenna 452.

In the transmission from the first communication device 450 to the second communication device 410, the second communication device 410 performs functions similar to those of the receiving function at the first communication device 450, as described in the transmission from the second communication device 410 to the first communication device 450. Each receiver 418 receives a radio frequency signal through its respective antenna 420, converts the received radio frequency signal into a baseband signal, and provides the baseband signal to the multi-antenna receiving processor 472 and the receiving processor 470. The receiving processor 470 and the multi-antenna receiving processor 472 collectively implement the functions of the L1 layer. The controller/processor 475 implements L2 layer functions. The controller/processor 475 may be associated with memory 476 storing program code and data. The memory 476 may be referred to as a computer-readable medium. In the transmission from the first communication device 450 to the second communication device 410, the controller/processor 475 provides multiplexing between the transport and logical channel, packet reassembly, decryption, header decompression, control signal processing to recover the upper data packet from the UE450. The upper data packet from the controller/processor 475 may be provided to the core network.

As an embodiment, the first communication device 450 comprises: at least one processor and at least one memory, and at least the one memory comprising computer program code; at least the one memory and the computer program code being configured to be used together with at least the one processor, the first communication device 450 apparatus at least: receiving a first CSI-ReportConfig and receive a first DCI; sending at least a first CSI Reporting as a response to receiving the first DCI; wherein the first CSI-ReportConfig is used to configure the at least first CSI Reporting; the first CSI Reporting occupies a CSI processing unit from the first symbol until the last symbol of the first physical layer channel, the first CSI Reporting is on the first physical layer channel; the first symbol is related to the reportConfigType domain in the first CSI-ReportConfig; when the reportConfigType domain in the first CSI-ReportConfig is semiPersistentOnPUSCH, the first symbol is the first symbol after the PDCCH occupied by the first DCI; when the reportConfigType domain in the first CSI-ReportConfig is periodic, the first symbol is the earliest symbol in the first occasion set, which includes at least one of the most recent CSI-RS occasion, the most recent CSI-IM occasion, or the most recent SSB occasion before the CSI reference resource of the first CSI Reporting.

As an embodiment, the first communication device 450 comprises: A memory storing a computer-readable instruction program that when executed by at least one processor generates an action, the action comprises: receiving a first CSI-ReportConfig and receive a first DCI; sending at least a first CSI Reporting as a response to receiving the first DCI; wherein the first CSI-ReportConfig is used to configure the at least first CSI Reporting; the first CSI Reporting occupies a CSI processing unit from the first symbol until the last symbol of the first physical layer channel, the first CSI Reporting is on the first physical layer channel; the first symbol is related to the reportConfigType domain in the first CSI-ReportConfig; when the reportConfigType domain in the first CSI-ReportConfig is semiPersistentOnPUSCH, the first symbol is the first symbol after the PDCCH occupied by the first DCI; when the reportConfigType domain in the first CSI-ReportConfig is periodic, the first symbol is the earliest symbol in the first occasion set, which includes at least one of the most recent CSI-RS occasion, the most recent CSI-IM occasion, or the most recent SSB occasion before the CSI reference resource of the first CSI Reporting.

As an embodiment, the second communication device 410 includes: at least one processor and at least one memory, and at least the one memory comprising computer program code; at least the one memory and the computer program code being configured to be used together with at least the one processor. The second communication device 410 at least: sending a first CSI-ReportConfig and sending a first DCI; receiving at least a first CSI Reporting; wherein the first DCI is used to trigger the first CSI Reporting, the first CSI-ReportConfig is used to configure the at least first CSI Reporting; the first CSI Reporting occupies a CSI processing unit from the first symbol until the last symbol of the first physical layer channel, the first CSI Reporting is on the first physical layer channel; the first symbol is related to the reportConfigType domain in the first CSI-ReportConfig; when the reportConfigType domain in the first CSI-ReportConfig is semiPersistentOnPUSCH, the first symbol is the first symbol after the PDCCH occupied by the first DCI; when the reportConfigType domain in the first CSI-ReportConfig is periodic, the first symbol is the earliest symbol in the first occasion set, which includes at least one of the most recent CSI-RS occasion, the most recent CSI-IM occasion, or the most recent SSB occasion before the CSI reference resource of the first CSI Reporting.

As an embodiment, the second communication device 410 includes: A memory storing a computer-readable instruction program that when executed by at least one processor generates an action, the action comprises: sending a first CSI-ReportConfig and sending a first DCI; receiving at least a first CSI Reporting; wherein the first DCI is used to trigger the first CSI Reporting, the first CSI-ReportConfig is used to configure the at least first CSI Reporting; the first CSI Reporting occupies a CSI processing unit from the first symbol until the last symbol of the first physical layer channel, the first CSI Reporting is on the first physical layer channel; the first symbol is related to the reportConfigType domain in the first CSI-ReportConfig; when the reportConfigType domain in the first CSI-ReportConfig is semiPersistentOnPUSCH, the first symbol is the first symbol after the PDCCH occupied by the first DCI; when the reportConfigType domain in the first CSI-ReportConfig is periodic, the first symbol is the earliest symbol in the first occasion set, which includes at least one of the most recent CSI-RS occasion, the most recent CSI-IM occasion, or the most recent SSB occasion before the CSI reference resource of the first CSI Reporting.

As an embodiment, at least one of the antenna 452, the receiver 454, the receiving processor 456, the multi-antenna receiving processor 458, the controller/processor 459 is used to receive a first CSI-ReportConfig.

As an embodiment, at least one of the antenna 420, the transmitter 418, the transmission processor 416, the multi-antenna transmission processor 471, the controller/processor 475 is used to send a first CSI-ReportConfig.

As an embodiment, at least one of the antenna 452, the receiver 454, the receiving processor 456, the multi-antenna receiving processor 458, the controller/processor 459 is used to receive a first DCI.

As an embodiment, at least one of the antenna 420, the transmitter 418, the transmission processor 416, the multi-antenna transmission processor 471, the controller/processor 475 is used to send a first DCI.

As an embodiment, the controller/processor 459 is used to generate the at least first CSI Reporting.

As an embodiment, the controller/processor 475 is used to send the first DCI and the first CSI-ReportConfig.

As an embodiment, the first communication device 450 corresponds to a first node in the present application.

As an embodiment, the second communication device 410 corresponds to a second node in the present application.

As an embodiment, the first communication device 450 is a user device.

As an embodiment, the first communication device 450 is a user device that supports a large latency difference.

As an embodiment, the first communication device 450 is a NTN-enabled user device.

As an embodiment, the first communication device 450 is an aircraft device.

As an embodiment, the first communication device 450 has positioning capabilities.

As an embodiment, the first communication device 450 does not have the positioning capabilities.

As an embodiment, the first communication device 450 is a TN-enabled user device.

As an embodiment, the second communication device 410 is a base station device (gNB/eNB/ng-eNB).

As an embodiment, the second communication device 410 is a base station device that supports a large latency difference.

As an embodiment, the second communication device 410 is a base station device that supports NTN.

As an embodiment, the second communication device 410 is a satellite device.

As an embodiment, the second communication device 410 is a flight platform device.

As an embodiment, the second communication device 410 is a TN-enabled base station device.

### Embodiment 5

Embodiment 5 illustrates a signal transmission flow diagram according to an embodiment of the present application, as shown in FIG. 5. The steps in block F0 and in block F1 are respectively optional in FIG. 5.

For the first node N1, in step S100, receives the first CSI-ReportConfig and receives the first DCI; in step S101, sends the first HARQ-ACK; in step S102, performs measurement in the first RS resource group; and in step S103, sending at least a first CSI Reporting as a response to receiving the first DCI.

For the second node N2, in step S200, sends the first CSI-ReportConfig and sends the first DCI; in step S201, receives the first HARQ-ACK; in step S202, sends a reference signal in the first RS resource group; and in step S203, receives the at least first CSI Reporting.

In Embodiment 5, the first CSI-ReportConfig is used to configure the at least first CSI Reporting; the first CSI Reporting occupies a CSI processing unit from the first symbol until the last symbol of the first physical layer channel, the first CSI Reporting is on the first physical layer channel; the first symbol is related to the reportConfigType domain in the first CSI-ReportConfig; when the reportConfigType domain in the first CSI-ReportConfig is semiPersistentOnPUSCH, the first symbol is the first symbol after the PDCCH occupied by the first DCI; when the reportConfigType domain in the first CSI-ReportConfig is periodic, the first symbol is the earliest symbol in the first occasion set, which includes at least one of the most recent CSI-RS occasion, the most recent CSI-IM occasion, or the most recent SSB occasion before the CSI reference resource of the first CSI Reporting.

As an embodiment, the second node N2 receiving the first HARQ-ACK in the step S201; the first node N1, sending the first HARQ-ACK in the step S101, the first HARQ-ACK being associated to the first DCI; wherein after the first physical layer channel is at the first HARQ-ACK, the time domain resource occupied by the first HARQ-ACK is used to determine the first physical layer channel.

As an embodiment, the second node sends a reference signal in the first RS resource group in step S202, wherein the reference signal in the first RS resource group is used to generate the at least first CSI Reporting; the first node N1, in step S102, performs a measurement in a first RS resource group, and the measurement in the first RS resource group is used to generate the first CSI Reporting; wherein the first DCI is used to trigger the measurement in the first RS resource group comprising at least one of a CSI-RS resource, a CSI-IM resource and a SSB resource.

As an embodiment, the first CSI-ReportConfig is used to configure the first RS resource group.

As an embodiment, the first DCI is used to indicate a TCI state of a CSI-RS resource in the first RS resource group.

As an embodiment, the first DCI is used to indicate activation of the first RS resource group.

As an embodiment, the first DCI is used to trigger a rate match for PDSCH execution on Resource Element (RE) of the first RS resource group.

As an embodiment, the first DCI is used to indicate a time domain resource of the first RS resource group.

As an embodiment, the second node N2 sends a reference signal in the step S202 on an RS resource other than CSI-IM in the first RS resource set.

As an embodiment, the first DCI is used to determine the first CSI-ReportConfig.

As an embodiment, the first DCI is used to indicate from a plurality of CSI-ReportConfig groups that the first CSI-ReportConfig belongs to a CSI-ReportConfig group, a CSI-ReportConfig group comprises at least one CSI-ReportConfig.

As an embodiment, the plurality of CSI-ReportConfig groups are configured by the same RRC Information Element (IE).

As an embodiment, the plurality of CSI-ReportConfig groups correspond to a plurality of trigger states respectively, the first DCI indicating from the plurality of trigger states a corresponding trigger state of the CSI-ReportConfig group to which the first CSI-ReportConfig belongs.

As an embodiment, the first occasion set belongs to the first RS resource group.

As an embodiment, the nearest CSI-RS occasion, the nearest CSI-IM occasion, and the nearest SSB occasion belong to the CSI-RS resource, the CSI-IM resource, and the SSB resource of the first RS resource group, respectively.

As an embodiment, the reportConfigType domain in the first CSI-ReportConfig is not a periodic.

As an embodiment, the reportConfigType domain in the first CSI-ReportConfig is periodic.

As an embodiment, the reportConfigType domain in the first CSI-ReportConfig is semiPeristentOnPUSCH.

As an embodiment, the reportConfigType domain in the first CSI-ReportConfig is semiPeristentOnPUCCH.

As an embodiment, the Time domain resource assignment (TDRA) domain in the first DCI is used to indicate the time domain resource occupied by the first physical layer channel.

As an embodiment, the first DCI indicates a time domain resource occupied by the first HARQ-ACK and the time domain resource occupied by the first HARQ-ACK is used to determine a time domain resource occupied by the first physical layer channel.

As an embodiment, the PDSCH-to-HARQ_feedback timing indicator domain in the first DCI indicates the time domain resource occupied by the first HARQ-ACK.

As an embodiment, the time domain resources occupied by the first HARQ-ACK implicitly indicate time domain resources occupied by the first physical layer channel.

As an embodiment, the first CSI-ReportConfig indicates a time slot used for CSI Reporting; the time slot occupied by the first physical layer channel is the first time slot of the time slot used for CSI Reporting after the time slot occupied by the first HARQ-ACK.

As an embodiment, the time slot used for CSI Reporting is indicated by the reportSlotConfig domain in the first CSI-ReportConfig.

As an embodiment, the at least first CSI Reporting comprises a plurality of CSI Reporting, with the first CSI Reporting being the earliest among them; for any CSI Reporting other than the first CSI Reporting, the CSI processing unit is occupied from the target symbol until the last symbol of the target physical layer channel, and the CSI Reporting is on the target physical layer channel; the target symbol is the earliest symbol in the target occasion set, which includes at least one of the most recent CSI-RS occasion, the most recent CSI-IM occasion, or the most recent SSB occasion before the CSI reference resource of the CSI Reporting.

As an embodiment, when the reportConfigType domain in the first CSI-ReportConfig is semiPersistentOnPUSCH, the first physical layer channel is PUSCH; and when the reportConfigType domain in the first CSI-ReportConfig is periodic, the first physical layer channel is PUCCH.

As an embodiment, the block F0 is present.

As a sub-embodiment of the present embodiment, the first HARQ-ACK is received.

As an embodiment, the block F0 is not present.

As a sub-embodiment of the present embodiment, the first HARQ-ACK is not received.

As an embodiment, the block F1 is present.

As a sub-embodiment of the present embodiment, the first node N1 performs measurements in the first RS resource group.

As an embodiment, the block F1 is not present.

As a sub-embodiment of the present embodiment, the first node N1 does not perform measurements in the first RS resource group.

As an embodiment, the first HARQ-ACK is an ACK.

As an embodiment, the time domain resource occupied by the first HARQ-ACK is a time domain resource occupied by PUSCH carrying the first HARQ-ACK.

As an embodiment, the time domain resource occupied by the first HARQ-ACK is a time domain resource occupied by PUCCH carrying the first HARQ-ACK.

As an embodiment, the first HARQ-ACK is used to indicate whether the first DCI is properly encoded.

As an embodiment, the first HARQ-ACK is used to indicate whether the PDSCH scheduled by the first DCI is correctly encoded.

### Embodiment 6

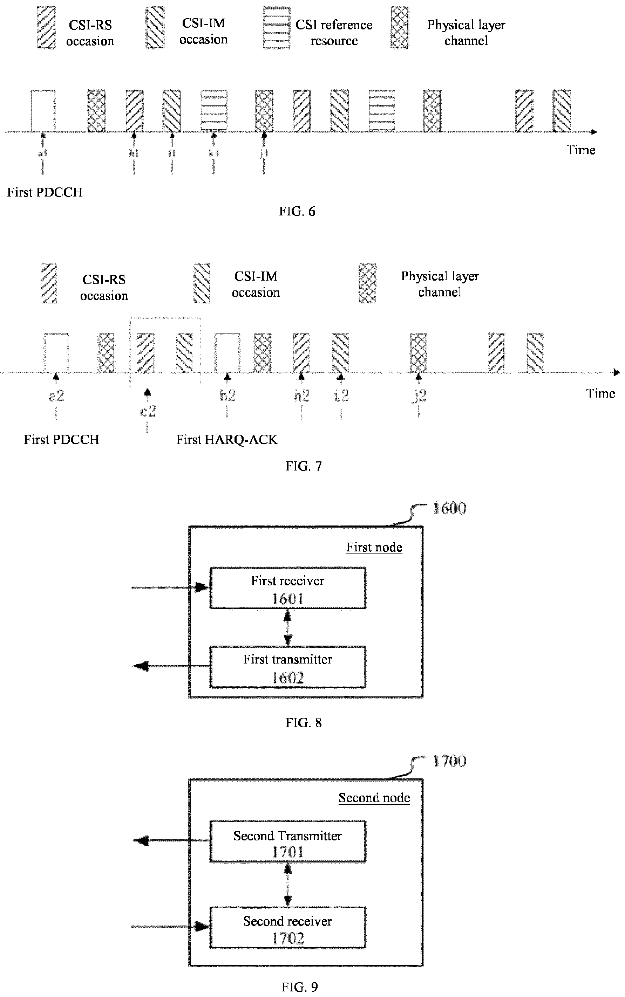

Embodiment 6 illustrates a schematic diagram of a first PDCCH, a first occasion set, and a first physical layer channel, according to an embodiment of the present application, as shown in FIG. 6. In FIG. 6, the horizontal axis represents the time, and the small box filled by slashes represents a CSI-RS occasion, the small box filled by desk slashes represents a CSI-IM occasion, the small box filled by crosslines represents a physical layer channel, and the small box filled by slashes represents a CSI reference resource.

In Embodiment 6, the first DCI is in the first PDCCH, and the time domain resources occupied by the first PDCCH are indicated by arrow a1; the signaling used to configure the time domain resources occupied by the physical layer channel in FIG. 6 includes the first CSI-ReportConfig; the first CSI Reporting is on the first physical layer channel, which occupies the time domain resources indicated by arrow j1; the time slot to which these time domain resources belong is used to determine the CSI reference resource of the first CSI Reporting; arrow k1 indicates the CSI reference resource of the first CSI Reporting; arrows h1 and i1 respectively indicate the most recent CSI-RS occasion and the most recent CSI-IM occasion before the CSI reference resource of the first CSI Reporting; the first occasion set includes the most recent CSI-RS occasion and the most recent CSI-IM occasion; the first symbol is related to the reportConfigType domain in the first CSI-ReportConfig; if the reportConfigType domain in the first CSI-ReportConfig is semiPersistentOnPUSCH, the first symbol is the first symbol after the first PDCCH; if the reportConfigType domain in the first CSI-ReportConfig is semiPersistentOnPUCCH, the first symbol is also the first symbol after the first PDCCH; if the reportConfigType domain in the first CSI-ReportConfig is periodic, the first symbol is the earliest symbol in the first occasion set.

As an embodiment, the time slot of the CSI reference resource of the first CSI Reporting depends on the time slot occupied by the first physical layer channel.

As an embodiment, the time slot to which the first physical layer channel belongs is a time slotn', the CSI reference resource reported by the first CSI is a time slot *f*(*n*')on the time domain, the *f*(*n*') is a function.

As an embodiment, the first DCI is used to indicate a time slotn'.

As an embodiment, the first DCI is used to indicate a symbol occupied by the first physical layer channel in a time slot*n'*.

As an embodiment, the specific relationship between *f*(*n*') and *n'* can be referenced in Section 5.2.2.5 of 3GPP TS38.214.

As an embodiment, the time slot of the CSI reference resource of the first CSI Reporting is before the first physical layer channel.

As an embodiment, FIG. 6 does not limit the location and size of the time domain resources of the first PDCCH in the present application.

As an embodiment, FIG. 6 does not limit the location and size of the time domain resources of the CSI-RS occasion in the present application.

As an embodiment, FIG. 6 does not limit the location and size of the time domain resources of the CSI-IM occasion in the present application.

As an embodiment, FIG. 6 does not limit the location and size of the time domain resources of the first physical layer channel in the present application.

As an embodiment, FIG. 6 does not limit the location and size of time domain resources for the CSI reference resources reported by the first CSI in the present application.

As an embodiment, FIG. 6 does not limit whether the time domain resources of the first PDCCH in the present application are contiguous.

As an embodiment, FIG. 6 does not limit whether the time domain resources of the CSI-RS occasion in the present application are contiguous.

As an embodiment, FIG. 6 does not limit whether the time domain resources of the CSI-IM occasion in the present application are contiguous.

As an embodiment, FIG. 6 does not limit whether the time domain resources of the first physical layer channel in the present application are contiguous.

As an embodiment, FIG. 6 does not limit whether the time domain resources of the CSI reference resources reported by the first CSI in the present application are contiguous.

As an embodiment, FIG. 6 does not limit the distribution of the first PDCCH on the frequency domain in the present application.

As an embodiment, FIG. 6 does not limit the distribution of the CSI-RS occasion on the frequency domain in the present application.

As an embodiment, FIG. 6 does not limit the distribution of the CSI-IM occasion on the frequency domain in the present application.

As an embodiment, FIG. 6 does not limit the distribution of the first physical layer channel on the frequency domain in the present application.

As an embodiment, FIG. 6 does not limit the distribution of the CSI reference resources reported by the first CSI in the present application on the frequency domain.

### Embodiment 7

Embodiment 7 illustrates a schematic diagram of a first PDCCH, a first occasion set, and a first physical layer channel according to yet another embodiment of the present application, as shown in FIG. 7. In FIG. 7, the horizontal axis represents the time, the small box filled with slashes represents one CSI-RS occasion, the small box filled with reverse slashes represents one CSI-IM occasion, and the small box filled with cross-line represents a physical layer channel; the CSI-RS occasion and CSI-IM occasion within the dashed box indicated by arrow c2 in FIG. 7 are optional.

In Embodiment 7, the first DCI is in the first PDCCH, and the time domain resources occupied by the first PDCCH are indicated by arrow a2; the signaling used to configure the time domain resources occupied by the physical layer channel in FIG. 7 includes the first CSI-ReportConfig; the first DCI is used to trigger the first HARQ-ACK, which occupies the time domain resources indicated by arrow b2; the first symbol is the earliest symbol in the first occasion set; the first CSI Reporting is on the first physical layer channel, which occupies the time domain resources indicated by arrow j2; the time slot to which these time domain resources belong is used to determine the CSI reference resource of the first CSI Reporting; arrows h2 and i2 respectively indicate the most recent CSI-RS occasion and the most recent CSI-IM occasion before the CSI reference resource of the first CSI Reporting; the first occasion set includes the most recent CSI-RS occasion and the most recent CSI-IM occasion.

As an embodiment, the first CSI Reporting occupies the CSI processing unit from the first symbol until the last symbol of the first physical layer channel.

As an embodiment, the time slot occupied by the first HARQ-ACK is used to determine the time slot occupied by the first physical layer channel.

As an embodiment, the first CSI-ReportConfig is configured as a time slot of CSI Reporting, the time slot occupied by the first physical layer channel is one of the time slots of CSI Reporting, and the time slot occupied by the first HARQ-ACK is used to determine the time slot occupied by the first physical layer channel.

As an embodiment, the time slot occupied by the first physical layer channel is the first time slot for CSI Reporting that comes after the time slot occupied by the first HARQ-ACK.

As an embodiment, the time slot occupied by the first physical layer channel is the earliest time slot that satisfies all of the conditions in the set of target conditions, the set of target conditions comprising: The time slot of one of the time slots reported for CSI is located after the time slot occupied by the first HARQ-ACK and there is at least one CSI-RS occasion configured by the first CSI-ReportConfig with the first PDCCH.

As an embodiment, the resource for measurement configured by the first CSI-ReportConfig is activated after the first HARQ-ACK.

As a sub-embodiment of the above embodiments, the resource for measuring is used to transmit PDSCH before being activated.

As a sub-embodiment of the above embodiments, UE performs a rate match for the resource for measurement after the resource for measurement is activated.

As a sub-embodiment of the above embodiments, the CSI-RS occasion and CSI-IM occasion in the dashed line box c2 in FIG. 7 do not appear.

As an embodiment, the resource for measurement includes at least one of a CSI-RS resource and an SSB.

As an embodiment, the resource for measurement includes a CSI-IM resource.

As an embodiment, the time slot of the CSI reference resource of the first CSI Reporting depends on the time slot occupied by the first physical layer channel.

As an embodiment, the time slot to which the first physical layer channel belongs is a time slot*n'*, the CSI reference resource reported by the first CSI is a time slot *f*(*n*')on the time domain, the *f*(*n*') is a function.

As an embodiment, the first DCI is used to indicate a time slotn'.

As an embodiment, the first DCI is used to indicate a symbol occupied by the first physical layer channel in a time slot*n'*.

As an embodiment, the specific relationship between *f*(*n*') and *n'* can be referenced in Section 5.2.2.5 of 3GPP TS38.214.

As an embodiment, when the reportConfigType domain in the first CSI-ReportConfig is semiPersistentOnPUSCH, the physical layer channel in FIG. 7 is PUSCH.

As an embodiment, when the reportConfigType domain in the first CSI-ReportConfig is semiPeristentOnPUCCH, the physical layer channel in the FIG. 7 is PUCCH.

As an embodiment, when the reportConfigType domain in the first CSI-ReportConfig is periodic, the physical layer channel in FIG. 7 is PUCCH.

### Embodiment 8

Embodiment 8 illustrates a structural block diagram of a processing device for use in a first node according to an embodiment of the present application, as shown in FIG. 8. In FIG. 8, the processing device 1600 in the first node includes a first receiver 1601 and a first emitter 1602.
the first receiver 1601, receiving a first CSI-ReportConfig, receiving a first DCI;

The first transmitter 1602, sending at least a first CSI Reporting as a response to receiving the first DCI.

In Embodiment 8, the first CSI-ReportConfig is used to configure the at least first CSI Reporting; the first CSI Reporting occupies a CSI processing unit from the first symbol until the last symbol of the first physical layer channel, the first CSI Reporting is on the first physical layer channel; the first symbol is related to the reportConfigType domain in the first CSI-ReportConfig; when the reportConfigType domain in the first CSI-ReportConfig is semiPersistentOnPUSCH, the first symbol is the first symbol after the PDCCH occupied by the first DCI; when the reportConfigType domain in the first CSI-ReportConfig is periodic, the first symbol is the earliest symbol in the first occasion set, which includes at least one of the most recent CSI-RS occasion, the most recent CSI-IM occasion, or the most recent SSB occasion before the CSI reference resource of the first CSI Reporting.

As an embodiment, when the reportConfigType domain in the first CSI-ReportConfig is semiPersistentOnPUCCH, the first symbol is the first symbol after the PDCCH occupied by the first DCI.

As an embodiment, the first transmitter 1602 sends a first HARQ-ACK, the first HARQ-ACK being associated with the first DCI; the first physical layer channel follows the first HARQ-ACK, and the time domain resources occupied by the first HARQ-ACK are used to determine the first physical layer channel.

As an embodiment, the first receiver 1601 performs a measurement in a first RS resource group and the measurement in the first RS resource group is used to generate the first CSI Reporting; wherein the first DCI is used to trigger the measurement in the first RS resource group, and the first RS resource group includes at least one of the CSI-RS resource, CSI-IM resource, and SSB resource.

As an embodiment, the at least first CSI Reporting comprises a plurality of CSI Reporting, with the first CSI Reporting being the earliest among them; for any CSI Reporting other than the first CSI Reporting, the CSI processing unit is occupied from the target symbol until the last symbol of the target physical layer channel, and the CSI Reporting is on the target physical layer channel; the target symbol is the earliest symbol in the target occasion set, which includes at least one of the most recent CSI-RS occasion, the most recent CSI-IM occasion, or the most recent SSB occasion before the CSI reference resource of the CSI Reporting.

As an embodiment, when the reportConfigType domain in the first CSI-ReportConfig is semiPersistentOnPUSCH, the first physical layer channel is PUSCH; and when the reportConfigType domain in the first CSI-ReportConfig is periodic, the first physical layer channel is PUCCH.

As an embodiment, the first node 1600 is a user device.

As an embodiment, the first receiver 1601 includes an antenna 452, receiver 454, a multi-antenna receiving processor 458, a receiving processor 456, a controller/processor 459, a memory 460, and a data source 467 in FIG. 4 of the present application.

As an embodiment, the first receiver 1601 includes an antenna 452, a receiver 454, a multi-antenna receiving processor 458, and a receiving processor 456 in the FIG. 4 of the present application.

As an embodiment, the first receiver 1601 includes an antenna 452, a receiver 454, and a receiving processor 456 in the FIG. 4 of the present application.

As an embodiment, the first transmitter 1602 includes an antenna 452, receiver 454, a multi-antenna receiving processor 458, a receiving processor 456, a controller/processor 459, a memory 460, and a data source 467 in FIG. 4 of the present application.

As an embodiment, the first transmitter 1602 includes an antenna 452, receiver 454, a multi-antenna receiving processor 458, and a receiving processor 456 in FIG. 4 of the present application.

As an embodiment, the first transmitter 1602 includes an antenna 452, a receiver 454, and a receiving processor 456 in FIG. 4 of the present application.

As an embodiment, the first transmitter 1602 includes an antenna 452, a transmitter 454, a multi-antenna transmission processor 457, a transmission processor 468, a controller/processor 459, a memory 460, and a data source 467 in FIG. 4 of the present application.

As an embodiment, the first transmitter 1602 includes an antenna 452, a transmitter 454, a multi-antenna transmission processor 457, and a transmission processor 468 in FIG. 4 of the present application..

As an embodiment, the first transmitter 1602 includes an antenna 452, a transmitter 454, and a transmission processor 468 in FIG. 4 of the present application..

### Embodiment 9

Embodiment 9 illustrates a structural block diagram of a processing device for use in a second node according to an embodiment of the present application, as shown in FIG. 9. In FIG. 9, the processing device 1700 in the second node includes a second transmitter 1701 and a second receiver 1702.

the second transmitter 1701, sending a first CSI-ReportConfig, sending a first DCI;

the second receiver 1702, receiving at least a first CSI Reporting.

In Embodiment 9, the first DCI is used to trigger the first CSI Reporting, the first CSI-ReportConfig is used to configure the at least first CSI Reporting; the first CSI Reporting occupies a CSI processing unit from the first symbol until the last symbol of the first physical layer channel; the first CSI Reporting is on the first physical layer channel; the first symbol is related to the reportConfigType domain in the first CSI-ReportConfig; when the reportConfigType domain in the first CSI-ReportConfig is semiPersistentOnPUSCH, the first symbol is the first symbol after the PDCCH occupied by the first DCI; when the reportConfigType domain in the first CSI-ReportConfig is periodic, the first symbol is the earliest symbol in the first occasion set, which includes at least one of the most recent CSI-RS occasion, the most recent CSI-IM occasion, or the most recent SSB occasion before the CSI reference resource of the first CSI Reporting.

As an embodiment, the second receiver 1702 receives a first HARQ-ACK, and the first HARQ-ACK being associated with the first DCI; the first physical layer channel follows the first HARQ-ACK, and the time domain resources occupied by the first HARQ-ACK are used to determine the first physical layer channel.

As an embodiment, the second transmitter 1701 sends a reference signal in a first RS resource group, wherein the reference signal in the first RS resource group is used to generate the first CSI Reporting; wherein the first DCI is used to trigger a measurement in the first RS resource group comprising at least one of a CSI-RS resource and an SSB resource.

As an embodiment, the at least first CSI Reporting comprises a plurality of CSI Reporting, with the first CSI Reporting being the earliest among them; for any CSI Reporting other than the first CSI Reporting, the CSI processing unit is occupied from the target symbol until the last symbol of the target physical layer channel, and the CSI Reporting is on the target physical layer channel; the target symbol is the earliest symbol in the target occasion set, which includes at least one of the most recent CSI-RS occasion, the most recent CSI-IM occasion, or the most recent SSB occasion before the CSI reference resource of the CSI Reporting.

As an embodiment, when the reportConfigType domain in the first CSI-ReportConfig is semiPersistentOnPUSCH, the first physical layer channel is PUSCH; and when the reportConfigType domain in the first CSI-ReportConfig is periodic, the first physical layer channel is PUCCH.

As an embodiment, the second node 1700 is a base station device.

As an embodiment, the second transmitter 1701 includes an antenna 420, a transmitter 418, a multi-antenna transmission processor 471, a transmission processor 416, a controller/processor 475, and memory 476 in FIG. 4 of the present application.

As an embodiment, the second transmitter 1701 includes an antenna 420, a transmitter 418, a multi-antenna transmission processor 471 and a transmission processor 416 in FIG. 4 of the present application.

As an embodiment, the second transmitter 1701 includes an antenna 420, a transmitter 418, and a transmission processor 416 in FIG. 4 of the present application.

As an embodiment, the second receiver 1702 includes an antenna 420, a transmitter 418, a multi-antenna transmission processor 471, a transmission processor 416, a controller/processor 475, and a memory 476 in FIG. 4 of the present application.

As an embodiment, the second receiver 1702 includes an antenna 420, a transmitter 418, a multi-antenna transmission processor 471 and a transmission processor 416 in FIG. 4 of the present application.

As an embodiment, the second receiver 1702 includes an antenna 420, a transmitter 418, and a transmission processor 416 in FIG. 4 of the present application.

As an embodiment, the second receiver 1702 includes an antenna 420, a receiver 418, a multi-antenna receiving processor 472, a receiving processor 470, a controller/processor 475, a memory 476 in FIG. 4 of the present application.

As an embodiment, the second receiver 1702 includes an antenna 420, a receiver 418, a multi-antenna receiving processor 472 and a receiving processor 470 in FIG. 4 of the present application.

As an embodiment, the second receiver 1702 includes an antenna 420, a receiver 418, and a receiving processor 470 in FIG. 4 of the present application.

Those of ordinary skill in the art may understand that all or part of the steps in the above described methods may be accomplished by a program directing related hardware that may be stored in computer-readable storage media, such as read-only memory, hard disk, or optical disk. Optionally, the steps of the above embodiments, in whole or in part, may also be implemented using one or more integrated circuits. Accordingly, the various module units in the above embodiments may be implemented in the form of hardware or in the form of software function modules, and the present application is not limited to the combination of software and hardware in any particular form. The user devices, terminals, and UEs in the present application include but are not limited to drones, communication modules on drones, remotely controlled aircrafts, aircrafts, small aircrafts, cell phones, tablets, notebooks, in-vehicle communication devices, wireless sensors, network cards, IoT terminals, RFID terminals, NB-IOT terminals, Machine Type Communication (MTC) terminals, enhanced MTC (eMTC), enhanced MTCs, low-cost communication devices, low-cost communication devices, mobiles, etc. The base stations or system devices in the present application include, but are not limited to, macro cellular base stations, micro cell base stations, femtocell base stations, relay base stations, gNB, TRP and other wireless communication devices.

The foregoing is merely a preferred embodiment of the present application and is not intended to limit the protective scope of the present application. Any modifications, equivalent substitutions, improvements, etc. made within the spirit and principles of the present application shall be included within the scope of protection of the present application.

## Claims

1. a first node for wireless communication, wherein it comprises:
a first receiver, receiving a first CSI-ReportConfig, receiving a first DCI;
a first transmitter, sending at least a first CSI Reporting as a response to receiving the first DCI;
wherein the first CSI-ReportConfig is used to configure the at least first CSI Reporting; the first CSI Reporting occupies a CSI processing unit from the first symbol until the last symbol of the first physical layer channel, the first CSI Reporting is on the first physical layer channel; the first symbol is related to the reportConfigType domain in the first CSI-ReportConfig; when the reportConfigType domain in the first CSI-ReportConfig is semiPersistentOnPUSCH, the first symbol is the first symbol after the PDCCH occupied by the first DCI; when the reportConfigType domain in the first CSI-ReportConfig is periodic, the first symbol is the earliest symbol in the first occasion set, which includes at least one of the most recent CSI-RS occasion, the most recent CSI-IM occasion, or the most recent SSB occasion before the CSI reference resource of the first CSI Reporting.

2. The first node according to Claim 1, wherein it comprises:
the first transmitter sending a first HARQ-ACK, and the first HARQ-ACK being associated with the first DCI;
wherein, the first physical layer channel follows the first HARQ-ACK, and the time-domain resources occupied by the first HARQ-ACK are used to determine the first physical layer channel.

3. The first node according to Claim 1 or 2, wherein it comprises:
the first receiver performing a measurement in a first RS resource group, the measurement in the first RS resource group being used to generate the first CSI Reporting;
wherein the first DCI is used to trigger the measurement in the first RS resource group comprising at least one of a CSI-RS resource, a CSI-IM resource, and an SSB resource.

4. The first node according to any one of Claims 1-3, wherein the at least first CSI Reporting comprises a plurality of CSI Reporting, with the first CSI Reporting being the earliest among them; for any CSI Reporting other than the first CSI Reporting, the CSI processing unit is occupied from the target symbol until the last symbol of the target physical layer channel, and the CSI Reporting is on the target physical layer channel; the target symbol is the earliest symbol in the target occasion set, which includes at least one of the most recent CSI-RS occasion, the most recent CSI-IM occasion, or the most recent SSB occasion before the CSI reference resource of the CSI Reporting.

5. The first node according to any one of Claims 1-4, wherein when the reportConfigType domain in the first CSI-ReportConfig is semiPersistentOnPUSCH, the first physical layer channel is PUSCH; and when the reportConfigType domain in the first CSI-ReportConfig is periodic, the first physical layer channel is PUCCH.

6. a second node for wireless communication, wherein it comprises:
a second transmitter, sending a first CSI-ReportConfig, sending a first DCI;
a second receiver receiving at least a first CSI Reporting;
wherein the first DCI is used to trigger the first CSI Reporting, the first CSI-ReportConfig is used to configure the at least first CSI Reporting; the first CSI Reporting occupies a CSI processing unit from the first symbol until the last symbol of the first physical layer channel; the first CSI Reporting is on the first physical layer channel; the first symbol is related to the reportConfigType domain in the first CSI-ReportConfig; when the reportConfigType domain in the first CSI-ReportConfig is semiPersistentOnPUSCH, the first symbol is the first symbol after the PDCCH occupied by the first DCI; when the reportConfigType domain in the first CSI-ReportConfig is periodic, the first symbol is the earliest symbol in the first occasion set, which includes at least one of the most recent CSI-RS occasion, the most recent CSI-IM occasion, or the most recent SSB occasion before the CSI reference resource of the first CSI Reporting.

7. The second node according to Claim 6, wherein it comprises:
the second receiver receiving a first HARQ-ACK, the first HARQ-ACK being associated with the first DCI;
wherein, the first physical layer channel follows the first HARQ-ACK, and the time-domain resources occupied by the first HARQ-ACK are used to determine the first physical layer channel.

8. The second node according to Claim 6 or 7, wherein it comprises:
the second transmitter transmitting a reference signal in a first RS resource group, wherein the reference signal in the first RS resource group is used to generate the first CSI Reporting;
wherein the first DCI is used to trigger a measurement in the first RS resource group comprising at least one of a CSI-RS resource and an SSB resource.

9. The second node according to any one of Claims 6-8, wherein the at least first CSI Reporting comprises a plurality of CSI Reporting, with the first CSI Reporting being the earliest among them; for any CSI Reporting other than the first CSI Reporting, the CSI processing unit is occupied from the target symbol until the last symbol of the target physical layer channel, and the CSI Reporting is on the target physical layer channel; the target symbol is the earliest symbol in the target occasion set, which includes at least one of the most recent CSI-RS occasion, the most recent CSI-IM occasion, or the most recent SSB occasion before the CSI reference resource of the CSI Reporting.

10. The second node according to any one of Claims 6-9, wherein when the reportConfigType domain in the first CSI-ReportConfig is semiPersistentOnPUSCH, the first physical layer channel is PUSCH; and when the reportConfigType domain in the first CSI-ReportConfig is periodic, the first physical layer channel is PUCCH.

11. A method in a first node for wireless communication, wherein it comprises:
receiving a first CSI-ReportConfig and a first DCI;
sending at least a first CSI Reporting as a response to receiving the first DCI;
wherein the first CSI-ReportConfig is used to configure the at least first CSI Reporting; the first CSI Reporting occupies a CSI processing unit from the first symbol until the last symbol of the first physical layer channel, the first CSI Reporting is on the first physical layer channel; the first symbol is related to the reportConfigType domain in the first CSI-ReportConfig; when the reportConfigType domain in the first CSI-ReportConfig is semiPersistentOnPUSCH, the first symbol is the first symbol after the PDCCH occupied by the first DCI; when the reportConfigType domain in the first CSI-ReportConfig is periodic, the first symbol is the earliest symbol in the first occasion set, which includes at least one of the most recent CSI-RS occasion, the most recent CSI-IM occasion, or the most recent SSB occasion before the CSI reference resource of the first CSI Reporting.

12. The method in the first node according to Claim 11, wherein it comprises:
sending a first HARQ-ACK, which is associated with the first DCI;
wherein, the first physical layer channel follows the first HARQ-ACK, and the time-domain resources occupied by the first HARQ-ACK are used to determine the first physical layer channel.

13. The method in the first node according to Claim 11 or 12, wherein it comprises:
performing a measurement in a first RS resource group, the measurement in the first RS resource group being used to generate the first CSI Reporting;
wherein the first DCI is used to trigger the measurement in the first RS resource group comprising at least one of a CSI-RS resource, a CSI-IM resource, and an SSB resource.

14. The method in first node according to any one of Claims 11-13, wherein the at least first CSI Reporting comprises a plurality of CSI Reporting, with the first CSI Reporting being the earliest among them; for any CSI Reporting other than the first CSI Reporting, the CSI processing unit is occupied from the target symbol until the last symbol of the target physical layer channel, and the CSI Reporting is on the target physical layer channel; the target symbol is the earliest symbol in the target occasion set, which includes at least one of the most recent CSI-RS occasion, the most recent CSI-IM occasion, or the most recent SSB occasion before the CSI reference resource of the CSI Reporting.

15. The method in first node according to any one of Claims 11-14, wherein when the reportConfigType domain in the first CSI-ReportConfig is semiPersistentOnPUSCH, the first physical layer channel is PUSCH; and when the reportConfigType domain in the first CSI-ReportConfig is periodic, the first physical layer channel is PUCCH.

16. A method in a second node for wireless communication, wherein it comprises:
sending a first CSI-ReportConfig and a first DCI;
receiving at least a first CSI Reporting;
wherein the first DCI is used to trigger the first CSI Reporting, the first CSI-ReportConfig is used to configure the at least first CSI Reporting; the first CSI Reporting occupies a CSI processing unit from the first symbol until the last symbol of the first physical layer channel; the first CSI Reporting is on the first physical layer channel; the first symbol is related to the reportConfigType domain in the first CSI-ReportConfig; when the reportConfigType domain in the first CSI-ReportConfig is semiPersistentOnPUSCH, the first symbol is the first symbol after the PDCCH occupied by the first DCI; when the reportConfigType domain in the first CSI-ReportConfig is periodic, the first symbol is the earliest symbol in the first occasion set, which includes at least one of the most recent CSI-RS occasion, the most recent CSI-IM occasion, or the most recent SSB occasion before the CSI reference resource of the first CSI Reporting.

17. The method in the second node according to Claim 16, wherein it comprises:
receiving a first HARQ-ACK, and the first HARQ-ACK being associated with the first DCI;
wherein, the first physical layer channel follows the first HARQ-ACK, and the time-domain resources occupied by the first HARQ-ACK are used to determine the first physical layer channel.

18. The method in a second node according to Claim 16 or 17, wherein it comprises:
sending a reference signal in a first RS resource group, wherein the reference signal in the first RS resource group is used to generate the first CSI Reporting;
wherein the first DCI is used to trigger a measurement in the first RS resource group comprising at least one of a CSI-RS resource and an SSB resource.

19. The method in second node according to any one of Claims 16-18, wherein the at least first CSI Reporting comprises a plurality of CSI Reporting, with the first CSI Reporting being the earliest among them; for any CSI Reporting other than the first CSI Reporting, the CSI processing unit is occupied from the target symbol until the last symbol of the target physical layer channel, and the CSI Reporting is on the target physical layer channel; the target symbol is the earliest symbol in the target occasion set, which includes at least one of the most recent CSI-RS occasion, the most recent CSI-IM occasion, or the most recent SSB occasion before the CSI reference resource of the CSI Reporting.

20. The method in second node according to any one of Claims 16-19, wherein when the reportConfigType domain in the first CSI-ReportConfig is semiPersistentOnPUSCH, the first physical layer channel is PUSCH; and when the reportConfigType domain in the first CSI-ReportConfig is periodic, the first physical layer channel is PUCCH.
